# EUROPEAN PATENT APPLICATION

(11) **EP 2 787 483 A2**
(43) Date of publication of application: **08.10.2014**
(21) Application number: 14163296.8
(22) Date of filing: 03.04.2014
(51) Int. Cl.: G06T 1/00, G06T 7/00

(54) **Image processing device, control method, and program**

(30) Priority: 05.04.2013 JP 2013079922
(71) Applicant: OMRON CORPORATION, Kyoto, Kyoto 600-8530 (JP)
(72) Inventor: Ijiri, Takashi, Kyoto, Kyoto 600-8530 (JP); Nakaoka, Shohei, Kyoto, Kyoto 600-8530 (JP)
(74) Representative: Horn Kleimann Waitzhofer

(57) **Abstract**

There is desired a configuration that can realize a more efficient and high-speed image processing by utilizing knowledge that users have about a specific application image processing. An image processing device (100) includes a plurality of processing units (110a, 110b, 110c, 110d), an input unit (122) configured to receive image data generated by imaging an object (2) to be measured, a dialogue processing unit (124, 126, 128, 130, 152), and a generator configured to generate a command string to the plurality of processing units (110a, 110b, 110c, 110d), following a setting of an image processing that the dialogue processing unit (124, 126, 128, 130, 152) receives. The dialogue processing unit (124, 126, 128, 130, 152) adds a set of a start processing item (352) to instruct a start of parallel execution and an end processing item (354) to instruct an end of the parallel execution, in relation to an execution order of assigned processing items, and arbitrarily receive selection of processing items that are to be executed in parallel by two or more processing units in the plurality of processing units (110a, 110b, 110c, 110d), on the interface screen (300), in response to a user operation of instructing a setting of parallel execution.

## Description

### BACKGROUND

### 1. FIELD

The present invention relates to an image processing device having a plurality of processing units, a control method of the image processing device, and a program for the image processing device.

### 2. RELATED ART

In an FA (Factory Automation) field and others, what is called a visual sensor is practically used as a device that inspects presence of a defect or stain on objects to be measured such as workpieces, measures sizes of the workpieces, and recognizes a character and a diagram on the objects to be measured. Such a visual sensor realizes the above measurement processing by executing various image processing to image data obtained by imaging the objects to be measured.

In the FA field like this, there are demands for improving a line speed and reducing device cost. To meet the demands, there is known a configuration of an image processing device that executes a parallel processing by having a plurality of processing units installed on the image processing device. For example, Unexamined Japanese Patent Publication No. 2011-053787 (Patent Document 1) discloses an image processing device that can selectively execute a plurality of parallel processing according to the need, and the like. More specifically, Patent Document 1 includes a parallelizing unit that allocates each of a plurality of processing units contained in a target processing procedure to any one of a plurality of arithmetic processing, following a parallel processing mode selected by a mode selector.

In the image processing device disclosed in Patent Document 1, a part of the processing is automatically parallelized following a parallel processing mode that a user selects from among a plurality of parallel processing modes. That is, a technique disclosed in Patent Document 1 is for automatically realizing the parallelizing to a series of processing. Fig. 13 of Patent Document 1 discloses a configuration that enables the user to add or delete a processing unit or rearrange an execution order, based on a user's drag and drop operation. However, the image processing device (parallelizing unit) automatically executes the parallelizing.

When the above automatic parallelizing is employed, processing items are parallelized following a predetermined general rule. Therefore, depending on an application type to which the image processing device is applied, despite presence of a processing item that can be potentially parallelized, potential possibilities cannot be covered in some cases. That is, the configuration disclosed in Patent Document 1 is suitable for users who have a lack of knowledge about the image processing. However, for users who have knowledge about the image processing, the potential possibilities cannot be sufficiently utilized in some cases.

Therefore, there is desired a configuration that can realize a more efficient and high-speed image processing by utilizing user's knowledge about a specific application image processing.

### SUMMARY

According to one or more embodiments, an image processing device includes a plurality of processing units, an input unit configured to receive image data generated by imaging an object to be measured, a dialogue processing unit configured to provide at least an interface screen for receiving selection of one or more processing items to be used to image-process image data in a predetermined plurality of processing items and for receiving assignment of an execution order of selected processing items, and a generator configured to generate a command string to the plurality of processing units, following a setting of an image processing that the dialogue processing unit receives. The dialogue processing unit is configured to add a set of a start processing item to instruct a start of parallel execution and an end processing item to instruct an end of the parallel execution, in relation to an execution order of assigned processing items, and arbitrarily receive selection of processing items that are to be executed in parallel by two or more processing units in the plurality of processing units, on the interface screen, in response to a user operation of instructing a setting of parallel execution.

Preferably, the generator outputs a command string for making mutually different processing units execute processing that is assigned to be executed in parallel between the start processing item and the end processing item.

More preferably, the generator outputs a command string for executing processing items that are continuously assigned following the end processing item, after completing all processing that is assigned to be executed in parallel between the start processing item and the end processing item.

Preferably, the dialogue processing unit simultaneously deletes the set of the start processing item and the end processing item, in response to a user operation of instructing to delete setting of parallel execution.

Preferably, the dialogue processing unit is configured to receive a plurality of processing items as each processing that is assigned to be processed in parallel between the start processing item and the end processing item.

Preferably, the start processing item includes a command for securing memory areas related respectively to processing units associated with parallel execution, before start of the parallel execution, and for copying, in each of the memory areas, image data that is used before parallel execution.

More preferably, the end processing item includes a command for restoring image data that is used before start of parallel execution.

Preferably, the image processing device further includes a change unit configured to change a setting so that the two or more processing units execute in parallel, processing items other than processing items of which parallel execution is set, following a predetermined rule.

According to another aspect of the embodiment, there is provided a control method of an image processing device including a plurality of processing units, each of the processing units executing an image processing of image data generated by imaging an object to be measured. The control method includes a step of providing at least an interface screen for receiving selection of one or more processing items to be used to image-process image data in predetermined plurality of processing items and for receiving assignment of an execution order of selected processing items, a step of adding a set of a start processing item to instruct a start of parallel execution and an end processing item to instruct an end of the parallel execution, in relation to an execution order of assigned processing items, and arbitrarily receiving selection of processing items that are to be executed in parallel by two or more processing units in the plurality of processing units, on the interface screen, in response to a user operation of instructing a setting of parallel execution, and a step of generating a command string to the plurality of processing units, following a setting of an input image processing.

According to still another aspect of the embodiment, there is provided a program for an image processing device including a plurality of processing units, each of the processing units executing an image processing of image data generated by imaging an object to be measured. The program makes a computer execute a step of providing at least an interface screen for receiving selection of one or more processing items to be used to image-process image data in a predetermined plurality of processing items and for receiving assignment of an execution order of selected processing items, a step of adding a set of a start processing item to instruct a start of parallel execution and an end processing item to instruct an end of the parallel execution, in relation to an execution order of assigned processing items, and arbitrarily receiving selection of processing items that are to be executed in parallel by two or more processing units in the plurality of processing units, on the interface screen, in response to a user operation of instructing a setting of parallel execution, and a step of generating a command string to the plurality of processing units, following a setting of an input image processing.

According to the present invention, it is possible to realize a more efficient and high-speed image processing by utilizing knowledge that users have about a specific application image processing.

### BRIEF DESCRIPTION OF THE DRAWINGS

Fig. 1 is a schematic diagram illustrating an entire configuration of an image processing system including an image processing device according to the embodiment.
Fig. 2 is a schematic diagram illustrating a functional configuration of the image processing device according to the embodiment.
Fig. 3 is a view illustrating an operation screen associated with a flow generation provided by the image processing device according to the embodiment.
Figs. 4(a) to 4(c) are explanatory diagrams of examples of automatic parallelizing of a flow.
Figs. 5(a) to 5(d) are explanatory diagrams of a comparison between automatic parallelizing and manual parallelizing of a flow.
Figs. 6(a) and 6(b) are explanatory diagrams of a screen user interface associated with manual parallelizing provided by the image processing device according to the embodiment.
Figs. 7(a) and 7(b) are explanatory diagrams of a screen user interface associated with manual parallelizing provided by the image processing device according to the embodiment.
Fig. 8 is a schematic diagram illustrating a configuration of a control program that is installed in the image processing device according to the embodiment.
Fig. 9 is an explanatory diagram of handling of image data associated with execution of a parallelizing processing according to the embodiment.
Fig. 10 is a flowchart for explaining a processing procedure of the image processing device according to the embodiment.
Fig. 11 is a schematic diagram illustrating an entire configuration of an image processing system including an image processing device according to the embodiment.
Figs. 12(a) to 12(c) are explanatory diagrams of parallelizing of the flow of the image processing system illustrated in Fig. 10.
Fig. 13 is a diagram illustrating an example of a screen user interface corresponding to the flow illustrated in Fig. 12(c).
Fig. 14 is a schematic diagram illustrating an entire configuration of an image processing system including an image processing device according to the embodiment.
Figs. 15(a) to 15(c) are explanatory diagrams of parallelizing a flow of the image processing system illustrated in Fig. 14.
Fig. 16 is a diagram illustrating an example of a screen user interface corresponding to the flow illustrated in Fig. 15(c).

### DETAILED DESCRIPTION

An embodiment of the present invention will be described in detail with reference to the drawings. The same or corresponding portions in the drawings are denoted with identical symbols, and the same description will not be repeated.

### <A. Configuration of image processing system>

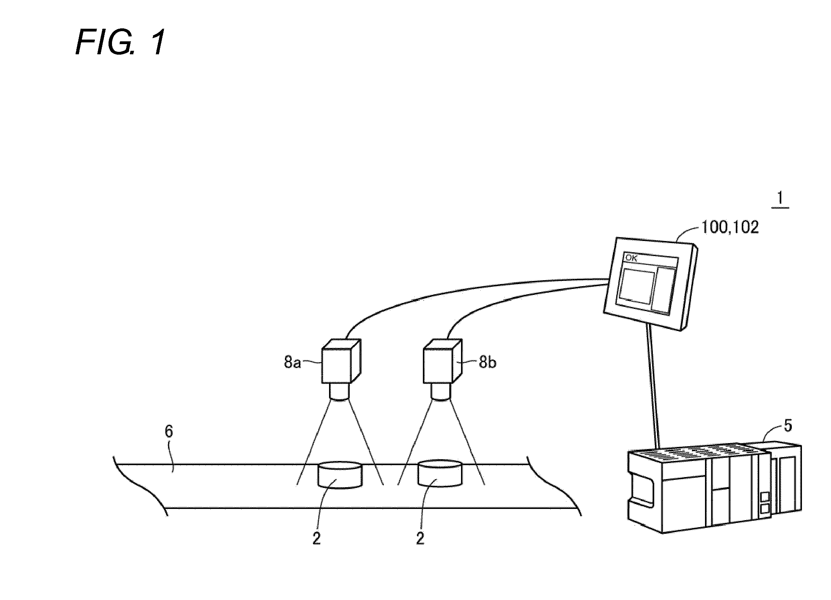

First, an entire configuration of image processing system 1 including image processing device 100 according to the embodiment of the present invention will be described. Fig. 1 is a schematic diagram illustrating an entire configuration of image processing system 1 including image processing device 100 according to the embodiment.

In Fig. 1, image processing system 1 includes, as main components, image processing device 100 that is referred to as a view sensor, imaging units 8a and 8b that are connected to image processing device 100, and PLC (Programmable Logic Controller) 5 that can communicate with image processing device 100. Fig. 1 illustrates image processing device 100 that is configured integrally with display 102.

Image processing device 100 is built in a production line and the like, and executes image processing such as inspecting presence of a defect or stain on objects to be measured (hereinafter, also referred to as "workpieces 2"), measuring a size, layout orientation, and the like of workpieces 2, and recognizing a character, a diagram, and the like on the surfaces of workpieces 2. That is, image processing device 100 executes the image processing of image data generated by imaging workpieces 2. In image processing system 1, convey mechanism 6 such as a belt conveyor conveys workpieces 2, and imaging units 8a, and 8b sequentially image workpieces 2. PLC 5 controls convey mechanism 6 and the like in liaison with image processing device 100.

Imaging units 8a and 8b (hereinafter, also referred to as "imaging unit 8") are configured to include imaging devices called a CCD (Coupled Charged Device) and a CMOS (Complementary Metal Oxide Semiconductor) sensor that are partitioned into a plurality of pixels, in addition to an optical system such as a lens, for example. Image data (hereinafter, also referred to as "camera image") that is acquired by imaging by imaging unit 8 is transmitted to image processing device 100. Image processing device 100 processes a camera image acquired by imaging unit 8. An illumination device that applies light to workpieces 2 which are imaged by imaging unit 8 may be further provided. Image processing device 100 may be configured to be connected to many imaging units 8.

Image processing device 100 includes at least a "measurement mode" for executing preset image processing to a camera image from imaging unit 8, and a "setting mode" for setting and adjusting the content of the image processing. In the "setting mode", the user can set, in image processing device 100, processing items for realizing the image processing and an order of executing the processing items. Details of the setting procedure associated with the image processing will be described later.

### <B. Configuration of image processing device>

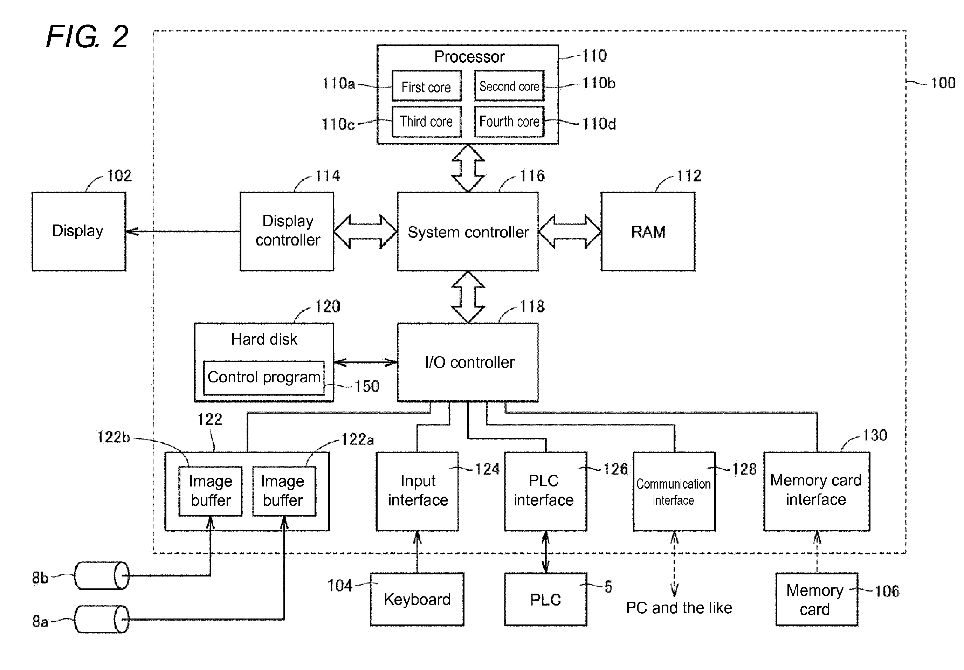

Next, an entire configuration of image processing device 100 included in image processing system 1 shown in Fig. 1 will be described. Fig. 2 is a schematic diagram illustrating a functional configuration of image processing device 100 according to the embodiment.

In Fig. 2, image processing device 100 representatively has a structure following a general-purpose computer architecture, and realizes various image processing described later by a processor that executes a program installed in advance.

More specifically, image processing device 100 includes processor 110 such as a CPU (Central Processing Unit) and an MPU (Micro-Processing Unit), RAM (Random Access Memory) 112, display controller 114, system controller 116, I/O (Input and Output) controller 118, hard disk 120, camera interface 122, input interface 124, PLC interface 126, communication interface 128, and memory card interface 130. These units are connected to each other so that data communication is possible, with system controller 116 as a center.

Processor 110 includes a plurality of processor cores (first core 110a, second core 110b, third core 110c, and fourth core 110d) corresponding to a plurality of processing units. Processor 110 exchanges programs (codes) with system controller 116, and realizes target arithmetic processing by executing the programs (codes) in a predetermined order.

Cores 110a to 110d can execute commands independently from each other. The number of cores installed in processor 110 is not limited to four, and may be a plurality of number within a technically realizable range. Fig. 2 illustrates a configuration of installing a plurality of cores in a single processor (what is called a multicore processor system). However, a configuration of installing a plurality of processors (what is called a multiprocessor system) may be employed. Further, a part or all of processors that configure a multiprocessor system may employ a multicore processor system. That is, the image processing device according to the embodiment may employ any architecture so long as the image processing device according to the embodiment has a plurality of processing units that can execute processing independently from each other.

System controller 116 is connected to processor 110, RAM 112, display controller 114, and I/O controller 118, via a bus. System controller 116 performs a data exchange with each unit, and also controls all processing of image processing device 100.

RAM 112 is representatively a volatile storage device such as a DRAM (Dynamic Random Access Memory). RAM 112 holds programs that are read from hard disk 120, camera images (image data) that are acquired by imaging unit 8, processing results of the camera images, and workpiece data.

Display controller 114 is connected to display 102, and outputs signals for displaying various information, to display 102, following an internal command from system controller 116. Examples of Display 102 include a liquid crystal display, an organic EL (Electro Luminescence) display, an organic EL, and the like.

I/O controller 118 controls a data exchange between a recording medium connected to image processing device 100 and an external device. More specifically, I/O controller 118 is connected to hard disk 120, camera interface 122, input interface 124, PLC interface 126, communication interface 128, and memory card interface 130.

Hard disk 120 is representatively a nonvolatile magnetic storage device, and stores various setting values, in addition to control program 150 that is executed by processor 110. Control program 150 to be installed in hard disk 120 is distributed in a state that control program 150 is stored in memory card 106 and the like. Further, hard disk 120 stores camera images, by logging processing described later. In place of hard disk 120, a semiconductor storage device such as a flash memory, and an optical storage device such as a DVD-RAM (Digital Versatile Disk Random Access Memory) may be employed.

Camera interface 122 corresponds to an input unit that receives image data that is generated by imaging workpiece 2 (an object to be measured). Camera interface 122 mediates a data transmission between processor 110 and imaging unit 8. More specifically, camera interface 122 can be connected to one or more imaging units 8, and includes image buffers 122a and 122b for temporarily accumulating image data from each imaging unit 8. A single image buffer that can be shared between imaging units 8 may be provided for a plurality of imaging units 8. However, for a high-speed processing, it is preferable to arrange a plurality of image buffers independently corresponding to respective imaging units 8.

Input interface 124 mediates a data transmission between processor 110 and an input device such as keyboard 104, a mouse, a touch panel, and an exclusive console. That is, input interface 124 receives an operation command given based on a user operation of the input device.

PLC interface 126 mediates a data transmission between processor 110 and PLC 5. More specifically, PLC interface 126 transmits, to processor 110, information associated with a state of a production line controlled by PLC 5 and information associated with workpiece 2.

Communication interface 128 mediates a data transmission between processor 110 and other personal computer, server device, and the like not illustrated. Communication interface 128 representatively includes Ethernet (registered trademark), USB (Universal Serial Bus), and the like. As described later, in place of a mode in which a program stored in memory card 106 is installed in image processing device 100, a program downloaded from a distribution server and the like may be installed in image processing device 100 via communication interface 128.

Memory card interface 130 mediates a data transmission between processor 110 and memory card 106 as a recording medium. That is, control program 150 and the like to be executed by image processing device 100 are distributed in a state that control program 150 and the like are stored in memory card 106. Memory card interface 130 reads the control program from this memory card 106. In response to an internal command from processor 110, memory card interface 130 writes, into memory card 106, camera images acquired by imaging unit 8 and/or a result of processing by image processing device 100, and the like. Memory card 106 includes a general-purpose storage device such as an SD (Secure Digital), a magnetic recording medium such as a flexible disk, an optical recording medium such as a CD-ROM (Compact Disk Read Only Memory), and the like.

Image processing device 100 may be connected to other output devices such as a printer, according to a need.

When using a computer having a structure following the general-purpose computer architecture as described above, an OS (Operating System) for providing fundamental functions of the computer may be installed, in addition to applications for providing functions according to the embodiment. In this case, a control program according to the embodiment may be a control program for executing a necessary module by calling the necessary module in a predetermined order and/or at timing, in program modules that are provided as a part of the OS. That is, the program itself according to the embodiment does not include the above module, and a processing is executed in cooperation with the OS in some cases. Therefore, the control program according to the embodiment may be in a mode not including such a part of the modules.

Further, the control program according to the embodiment may be provided by being built in a part of other program. Also in this case, the program itself does not include a module that is included in other program to be combined as described above, and the program itself is used to execute a processing in cooperation with this other program. That is, the control program according to the embodiment may be in a mode that the control program is built in this other program.

Alternatively, a part or all of functions provided by executing the control program may be installed as an exclusive hardware circuit.

### <C. Outline>

Image processing device 100 according to the embodiment can execute, to a camera image, image processing that includes at least one processing item that the user arbitrarily selects. The user executes an order of executing processing items that are included in the image processing. The content of the image processing that is defined by a series of the processing items is also referred to as a "flow". That is, the "flow" means a combination of processing items selected by input by the user. Executing the flow is also referred to as an "execution of a measurement processing". The processing item in the present specification is a functional unit ("processing item" or "unit") having a specific usage. A processing target and a processing result can be specified to each processing item.

In image processing device 100 according to the embodiment, there is provided a screen user interface for more simply setting parallel execution of processing items that configure a target image processing, so as to execute the image processing more efficiently at a higher speed by utilizing the knowledge of the user. That the user explicitly instructs parallel execution in this way is hereinafter also referred to as "manual parallelizing". In the embodiment, there may be also installed a processing that changes a user's set flow so that processing items included in the flow set by the user are executed in parallel following a predetermined rule. The operation that the image processing device changes the flow so as to execute the processing items in parallel in this way is hereinafter also referred to as "automatic parallelizing". In a more preferable embodiment, automatic parallelizing is also installed in addition to manual parallelizing.

A more detailed content associated with manual parallelizing according to the embodiment will be described below.

### <D. Screen user interface associated with flow generation>

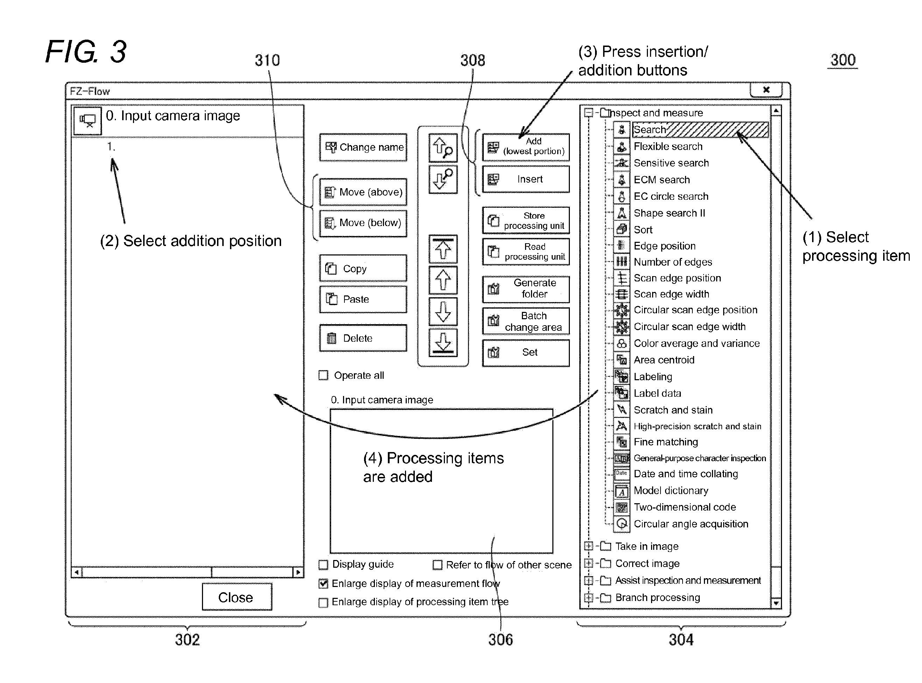

The screen user interface associated with a flow generation provided by image processing device 100 according to the embodiment will be described. Fig. 3 is a view illustrating operation screen 300 associated with a flow generation provided by image processing device 100 according to the embodiment.

Image processing device 100 provides, as a dialogue processing function, as illustrated in Fig. 3, at least an interface screen for receiving selection of one or more processing items to be used to image-process image data in a predetermined plurality of processing items and for receiving assignment of an execution order of selected processing items.

More specifically, a procedure for the user to generate a flow for realizing a target image processing will be described. Operation screen 300 includes setting-finished flow display area 302, processing-item selection area 304, camera-image display area 306, processing-item insertion/addition button 308, and execution-order replacement button 310. In setting-finished flow display area 302, there is graphically displayed the content of a flow (processing content) that is set at present. In processing-item selection area 304, there are displayed a list of icons together with names of the icons that indicate processing items which can be added.

The user selects processing items that are necessary for a target image processing, in processing-item selection area 304 of operation screen 300 ((1) select a processing item), and also selects a position (order) to which a processing item selected in setting-finished flow display area 302 is to be added (addition position). When the user selects processing-item insertion/addition button 308 ((3) press insertion/addition button), a processing item is added ((4) a processing item is added). The content of the flow after addition of the processing item is reflected in setting-finished flow display area 302.

The user generates the flow for realizing the target image processing, by appropriately repeating this process. During the generation or after completing the generation of the flow, the user can appropriately change the execution order, by selecting a processing item in setting-finished flow display area 302, and thereafter, by selecting execution-order replacement button 310.

By the above operation, the user can generate the flow that is necessary for the target image processing. The flow generation is executed in the setting mode.

Thereafter, when the measurement mode is instructed, execution of the assigned flow is started. More specifically, after the flow generation is completed (representatively, the generated flow is stored), a command string corresponding to the stored flow is generated. When the processor executes the command string, the target image processing is realized. The command string may be a native code that is given to the processor, or may be an internal command that is given to the OS or a middleware, or may be a mixture of the native code and the internal command.

That is, image processing device 100 generates a command string to a plurality of core processors (processing units), following the setting about the image processing received by the dialogue processing.

### <E. Parallelizing processing (automatic setting and manual setting)>

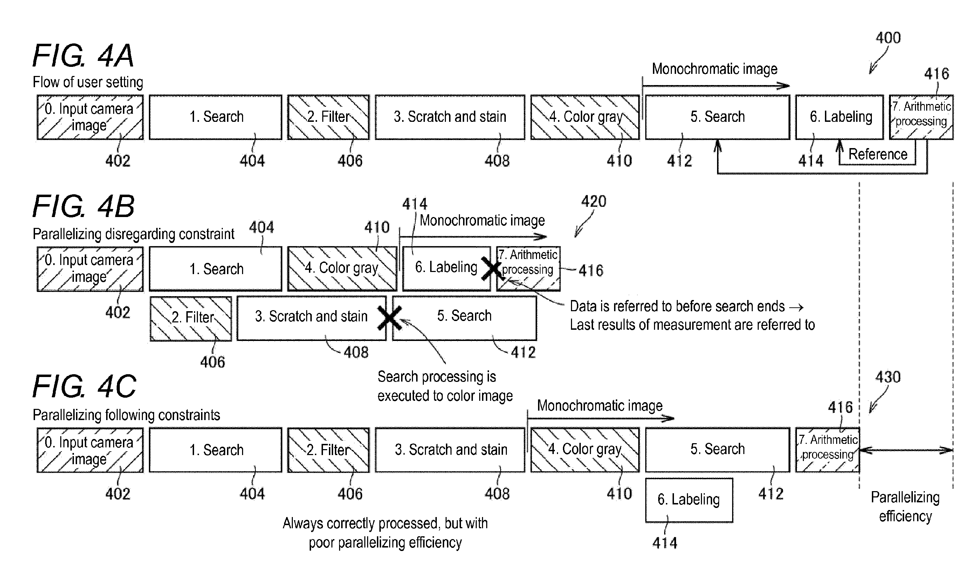

Next, the parallelizing processing for increasing the execution efficiency of the flow that is set by the user will be described. Particularly, automatic setting of the parallelizing processing and manual setting of the parallelizing processing will be described in comparison. Figs. 4(a) to 4(c) are explanatory diagrams of examples of automatic parallelizing of a flow.

Fig. 4(a) illustrates an example of a flow that is set by the user. Flow 400 illustrated in Fig. 4(a) includes processing items 402, 404, 406, 408, 410, 412, 424, and 416 that are executed in series. At an initial stage, the user designs a flow so that a series of processing is executed in series. More specifically, processing item 402 described as "0. Input camera image" includes a command for acquiring a camera image. Processing item 404 described as "1. Search" includes a command for searching an area that coincides with a model registered in advance in the camera image. Processing item 406 displayed as "2. Filter" includes a command for adjusting, for example, the camera image to an image suitable for the processing in a processing item at a later stage. Processing item 406 can include a command for removing an unnecessary background by extending an assigned range of concentration, and a command for removing follow-up of brightness change in an entire screen and a staged change in brightness. Processing item 408 displayed as "3. Scratch and stain" includes a command for inspecting a scratch, stain, lack of parts, blur, and the like that are present on the surface of the workpiece 2. Processing item 410 displayed as "4. Color grey" includes a command for converting a color image into a monochromatic image emphasized by a specified color. Processing item 412 displayed as "5. Search" includes a command for identifying a shape and detecting a position of workpiece 2. Processing item 414 displayed as "6. Labeling" includes a command for counting the number of labels of a specified color and a command for measuring an area and a centroid position of a specified label. Processing item 416 displayed as "7. Arithmetic processing" includes a command for performing an evaluation using results of a plurality of processing items that are executed beforehand. Processing item 416 can include a command for performing an evaluation using multiple conditions, such as determining as "OK" when a degree of coincidence (degree of correlation) is 80% or more in the search in processing item 412 and also when an area of "brightness value is 100 or less" is present by 20% or more of an entire area in processing item 414, for example.

A case of parallelizing (multitasking) flow 400 set by the user as illustrated in Fig. 4(a) is considered for purpose of shortening a processing time. When the parallelizing is performed by disregarding constraints between the processing items, the flow can be converted to flow 420 as illustrated in Fig. 4(b), for example. In flow 420 illustrated in Fig. 4(b), it is instructed that, after the execution of processing item 402, four processing items in total of processing items 404, 410, 414, and 416 are executed in series as a first task, and three processing items in total of processing items 406 408, and 412 are executed in series as a second task to be executed in parallel with the first task.

However, in flow 420 that is parallelized as illustrated in Fig. 4(b), execution of processing item 412 (4. Color gray) is started before processing item 414 as the command for converting the camera image to a monochromatic image is executed. Therefore, the search processing is executed to the color image. That is, in the flow illustrated in Fig. 4(b), the processing of processing item 412 is not properly executed.

Further, processing item 416 needs to be executed by referring to processing results of processing item 412 and processing item 414. However, in the flow illustrated in Fig. 4(b), the execution of processing item 416 is started before the execution of processing item 412 is completed. That is, before the search processing of processing item 412 ends, processing item 416 refers to the data of processing item 412. The data stored in the reference destination is a measurement result of the past measurement processing. Therefore, an erroneous result is obtained by calculation.

As described above, for parallelizing the flow, it is necessary to consider relevant processing items that are before and after each processing item. That is, in the automatic parallelizing processing, when the following processing items are present, it is necessary to synchronize the processing that is executed in parallel at the existing positions (that is, wait until the execution of the other processing item is completed).

Fig. 4(c) illustrates flow 430 obtained by parallelizing processing items, following (1) a processing item that adds a certain workpiece to image data which is shared by a plurality of processing items, and (2) a processing item that refers to a result of other processing item.

In processing flow 430 illustrated in Fig. 4(c), processing item 412 and processing item 414 are executed in parallel. That is, a total processing time can be shortened (a parallelizing effect illustrated in Fig. 4(c)) by the time of a processing item (processing item 414 in the example in Fig. 4(c)) that requires a shorter time to complete the execution out of processing item 412 and processing item 414. When the parallelizing is performed following the constraint, like parallelized flow 430 illustrated in Fig. 4(c), the processing items are parallelized so that the processing items can be correctly processed. However, based on this method, in some cases, the time-shortening effect (parallelizing effect) cannot be increased so much.

Further, in the case of performing automatic parallelizing, operations change depending on a processing time and a parameter that each processing item requires. Therefore, the processing items need to be parallelized so that the processing items can be correctly processed in any condition. As a result, safer parallelizing needs to be performed, at the cost of lowering the parallelizing effect.

On the other hand, by utilizing the knowledge of the user who generated the flow concerned, the parallelizing effect can be further increased.

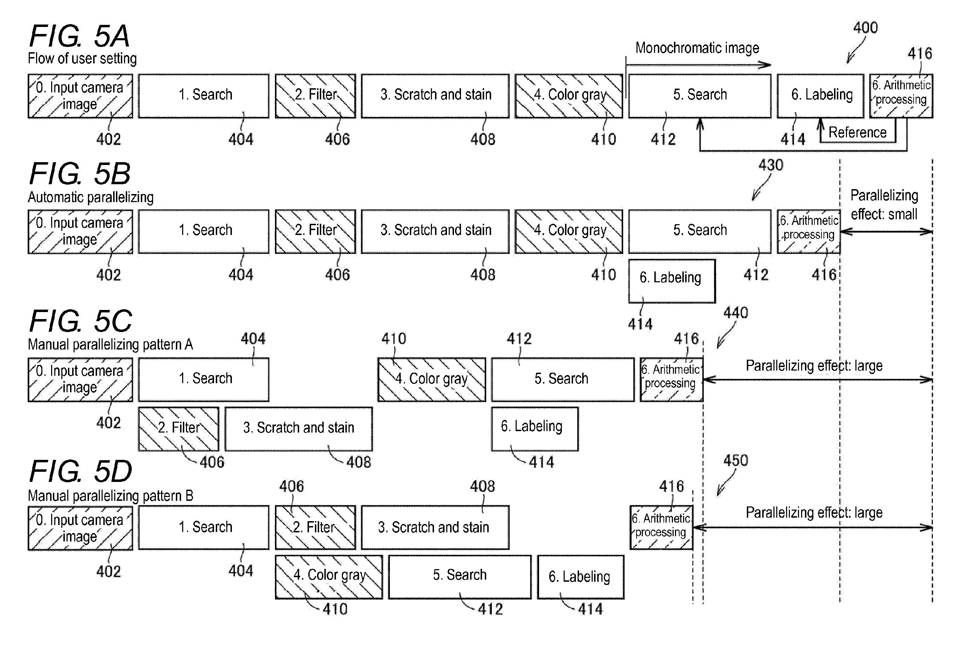

Figs. 5(a) to 5(d) are explanatory diagrams of a comparison between automatic parallelizing and manual parallelizing of a flow. Fig. 5(a) illustrates flow 400 that is the same as the flow in Fig. 4(a), and Fig. 5(b) illustrates parallelized flow 430 that is the same as the flow in Fig. 4(b). On the other hand, Fig. 5(c) and Fig. 5(d) illustrate flow 440 and flow 450 that are parallelized by utilizing the knowledge of the user.

As one knowledge, in flow 400 illustrated in Fig. 5(a), after a camera image is acquired in processing item 402, actually, two processing including the search processing of processing item 404, and the scratch and stain processing of processing item 406 and processing item 408 is executed to the acquired camera image. Thereafter, the camera image is converted to a gray image (monochromatic image) in processing item 410. Then, the search processing of processing item 412 and the labeling processing of processing item 414 are independently executed. Therefore, at the stage before the conversion to the monochromatic image, it can be known that the search processing and the scratch and stain processing can be parallelized. Further, at the stage after the conversion to the monochromatic image, it can be known that the search processing and the labeling processing can be parallelized. By using this knowledge, flow 430 (manual parallelizing pattern A) as illustrated in Fig. 5(c) can be obtained. In flow 440 illustrated in Fig. 5(c), it is possible to avoid executing the erroneous processing of flow 420 illustrated in Fig. 4(b).

As other knowledge, in flow 400 illustrated in Fig. 5(a), the search processing of processing item 404 is executed to the camera image acquired in processing item 402. Thereafter, the scratch and stain processing of processing item 408 is performed to the image that is filtered in processing item 406, and also, processing items 412, 414, and 416 are executed to the image filtered in processing item 410. By utilizing this knowledge, flow 450 (manual parallelizing pattern B) as illustrated in Fig. 5(d) can be obtained. In flow 450 illustrated in Fig. 5(d), it is possible to avoid executing the erroneous processing of flow 420 illustrated in Fig. 4(b).

According to the flows illustrated in Fig. 5(c) and Fig. 5(d), a larger parallelizing effect can be obtained than the parallelizing effect obtained by the flow that is automatically parallelized following the constraint illustrated in Fig 5(b).

As described above, a larger parallelizing effect can be obtained, by utilizing the knowledge that the user has about the image processing. That is, a flow configuration of a shorter processing time can be realized, by manually adjusting (by utilizing the knowledge of the user) the allocation of the processing items that are necessary to be parallelized.

### <F. Screen user interface associated with manual parallelizing>

Next, the screen user interface associated with manual parallelizing according to the embodiment will be described. In the embodiment, the user can explicitly set the parallelizing. That is, in image processing device 100, the function of manual parallelizing is installed, and the screen user interface associated with the setting of this function is also provided. Representatively, a processing item for setting the function of manual parallelizing is added to the processing items displayed in processing-item selection area 304 of operation screen 300 illustrated in Fig. 3.

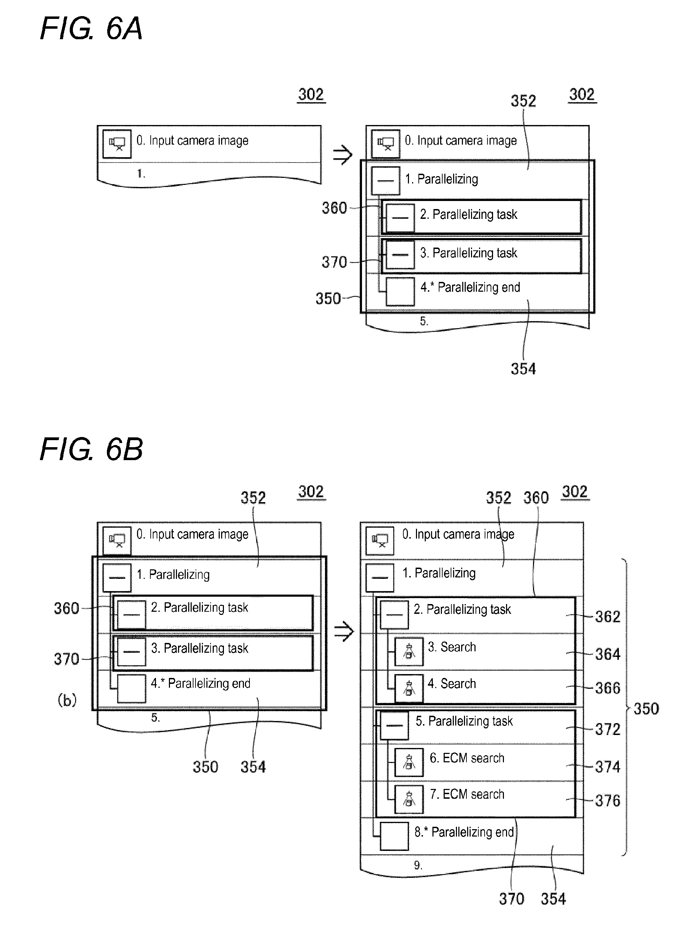

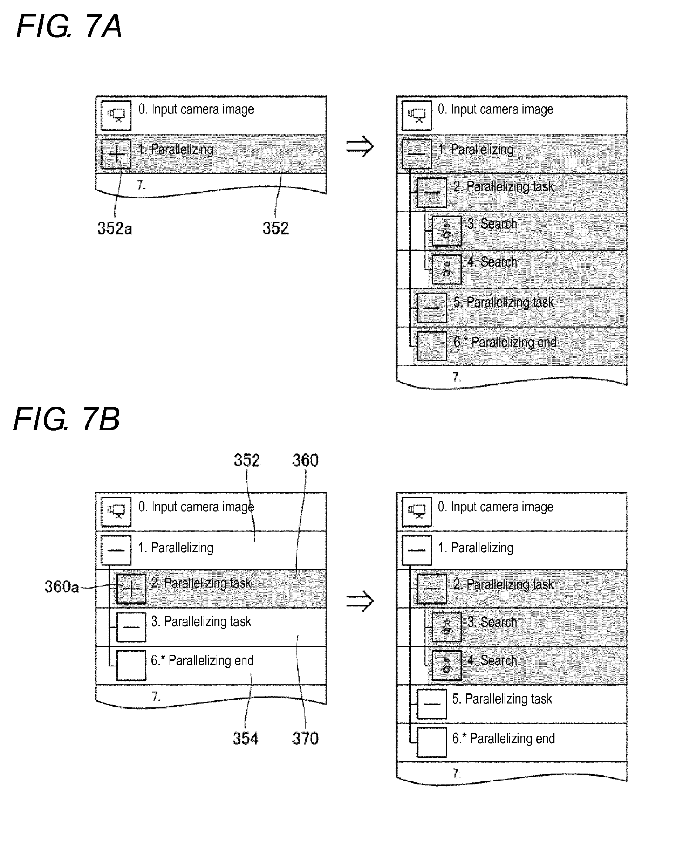

Figs. 6(a) and 6(b) and Figs. 7(a) and 7(b) are explanatory diagrams of the screen user interface associated with manual parallelizing provided by image processing device 100 according to the embodiment. As illustrated in Fig. 6(a), in the initial state or in a state that a certain processing item is set, when the user selects the icon for automatic parallelizing displayed in processing-item selection area 304, manual parallelizing block 350 is added to the flow in setting-finished flow display area 302.

Manual parallelizing block 350 includes at least a set of processing item 352 that indicates the parallel processing start, and parallel processing 354 that indicates the parallel processing end. Then, manual parallelizing block 350 includes one or more parallelizing tasks (parallelizing tasks 360 and 370, in the example illustrated in Fig. 6(a)) to be parallelized between processing item 352 and processing item 354. The user can also arbitrarily change the number of parallelizing tasks that are included in manual parallelizing block 350. That is, based on the user operation, parallelizing tasks are added to or deleted from assigned manual parallelizing block 350.

Processing item 352 that indicates the parallelizing processing start generates a command string to a plurality of processor cores (processing units), and also instructs a processing to shift to the processing end item (processing item 354) after the processing of all command strings ends. Processing item 354 that indicates the parallel processing end shifts to a succeeding processing after the processing has shifted from the processing end item (processing item 354).

As described above, in response to the user operation of instructing the setting of parallel execution, in the interface screen, the dialogue processing function of image processing device 100 is configured to: add a set of the start processing item (processing item 352) for instructing the start of the parallel execution and the end processing item (processing item 354) for instructing the end of the parallel processing, by relating the set of the start processing item and the end processing item to the execution order of the assigned processing items; and arbitrarily receive selection of processing items that are to be executed in parallel by two or more processing units in the plurality of processor cores (processing units).

However, in principle, it is not possible to execute in parallel the tasks that exceed the processing units (representatively, the number of cores and the number of processors) that are included in image processing device 100. Therefore, manual parallelizing block 350 can include parallelizing tasks of a number in a range not exceeding the number of processing units.

In the embodiment, as an example, when the icon of manual parallelizing that is displayed in processing-item selection area 304 is selected, parallelizing blocks including the predetermined number (representatively, two) of parallelizing tasks is automatically inserted. Representatively, each of the parallelizing blocks is executed as an independent thread. That is, when two parallelizing tasks as illustrated in Fig. 6(b) are in a set state, a plurality of threads corresponding to the respective parallelizing tasks are generated by the execution of manual parallelizing block 350. As a result, processing items that are set in advance are executed in the respective threads.

When the user selects a block that indicates a parallelizing task in a flow into which the parallelizing block is inserted, processing items to be executed in the corresponding paralleling task are displayed in further detail. As an example, as illustrated in Fig. 6(a), manual parallelizing block 350 that includes parallelizing tasks 360 and 370 is in a set state in setting-finished flow display area 302. In parallelizing task 360, processing items 364 and 366 associated with two search processing is in a set state as processing items that the user arbitrarily selected, in addition to processing item 362 that indicates the start of the parallelizing task. In parallelizing task 360, processing item 362, processing item 364, and processing item 366 are executed in series.

Similarly, in parallelizing task 370, processing items 374 and 376 associated with a search processing using an edge code are in a set state as processing items that the user arbitrarily selected, in addition to processing item 372 that indicates the start of the parallelizing task. In parallelizing task 370, processing item 372, processing item 374, and processing item 366 are executed in series.

As described above, operation screen 300 is configured to receive a plurality of processing items as processing that is assigned to be executed in parallel between the start processing item (processing item 352) and the end processing item (processing item 354). Each processor core (processing unit) is configured to assign a plurality of processing items associated with parallel execution. That is, a plurality of processing items can be also set to each of parallelizing tasks 360 and 370.

As illustrated in Figs. 6(a) and 6(b), the blocks (processing items) are representatively hierarchically displayed by using a tree structure. In Fig. 6(b), a last manual parallelizing block to the next manual parallelizing block forms one parallel processing (thread). Based on addition of a processing item to an arbitrary position of the parallelizing processing, the processing item is added as a processing item to be included in the parallelizing task.

Display of a detailed content that the user sets for manual parallelizing can be appropriately changed representatively in accordance with a hierarchy and the like using the tree structure. For example, as illustrated in Fig. 7(a), when the user selects button 352a of processing item 352 that indicates the start of the parallel processing, the set detailed content is developed. Conversely, when a developed display of the detailed content is folded, a simplified display is obtained. That is, in Figs. 7(a) and 7(b), it is possible to display all parallelizing tasks that are included in manual parallelizing block 350, and setting contents of the parallelizing tasks.

Further, the setting content can be also displayed for each of the parallelizing tasks. For example, as illustrated in Fig. 7(b), when the user selects button 352a of parallelizing task 360, a detailed content that is set for a selected parallelizing task is developed.

Further, when any one of processing items is selected in setting-finished flow display area 302, corresponding ranges (blocks) are selected in a batch. For example, as illustrated in Fig. 7(a), when processing item 352 that indicates the start of the parallel processing is selected, all manual parallelizing blocks are selected. That is, addition and/or deletion is executed in the unit of a manual parallelizing block. Alternatively, as illustrated in Fig. 7(b), when parallelizing task 360 is selected, all parallelizing tasks 360 are selected.

As described above, in the dialogue processing function of image processing device 100, in response to the user operation to delete the setting of parallel execution, a set of the start position (processing item 352) and the end position (processing item 354) associated with parallel execution is simultaneously deleted. That is, in manual parallelizing, processing items in each range are integrally handled, and addition or deletion is executed in the unit of a plurality of integrated processing items, not in a single processing item.

It is also possible to further apply automatic parallelizing to a flow to which the user has assigned the parallelizing processing by using a manual parallelizing block. In a preferable mode, it is preferable that, for processing items other than processing items of which parallel execution is instructed, image processing device 100 is installed in advance with a function that changes the setting so that two or more processor cores (processing units) execute the parallel processing, following predetermined rule.

### <G. Functional configuration of control program>

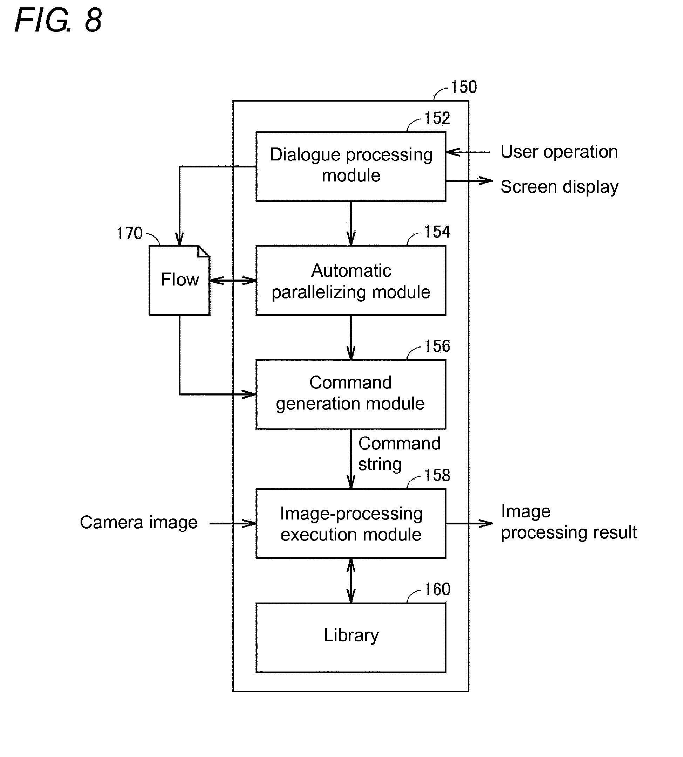

Next, a functional configuration of a control program for realizing the processing including manual parallelizing according to the embodiment will be described. Fig. 8 is a schematic diagram illustrating a configuration of control program 150 that is installed in image processing device 100 according to the embodiment.

In Fig. 8, control program 150 includes, as basic components, dialogue processing module 152, automatic parallelizing module 154, command generation module 156, image-processing execution module 158, and library 160.

Dialogue processing module 152 provides at least an interface screen for receiving selection of one or more processing items to be used to image-process image data in a predetermined plurality of processing items and for receiving assignment of an execution order of selected processing items. That is, dialogue processing module 152 provides a dialogue-type screen user interface for the user to generate flow 170 of a desired image processing following a user operation. More specifically, dialogue processing module 152 displays, in display 102, the screen user interface as illustrated in Figs. 3, 6(a) and 6(b), and 7(a) and 7(b), and also generates flow 170 following the user operation. Flow 170 that is generated is temporarily stored in a workpiece area that is secured in RAM 112 (Fig. 2) and the like.

Automatic parallelizing module 154 automatically parallelizes processing items that are included in flow 170, in addition to performing the above manual parallelizing. That is, automatic parallelizing module 154 evaluates whether, based on a predetermined rule, two or more processor cores (processing units) can execute in parallel processing items other than processing items of which parallel execution is assigned in flow 170. Automatic parallelizing module 154 executes the automatic parallelizing processing, following constraints between predetermined processing items. Automatic parallelizing module 154 notifies command generation module 156 of a plurality of processing items to be automatically parallelized out of the processing items included in flow 170. That is, automatic parallelizing module 154 dispatches an internal command to command generation module 156 so that a part or all of processing items of which parallel execution has been not explicitly instructed by the user are executed in parallel by two or more processor cores (processing units) based on a predetermined rule.

Command generation module 156 generates a command string to a plurality of processor cores (processing units), following the setting (flow 170) associated with the image processing that dialogue processing module 152 has received. That is, command generation module 156 generates a program for realizing the processing that follows flow 170 which is set by the user. At this time, when the plurality of processing items to be automatically parallelized are notified from command generation module 156, command generation module 156 generates the command string so that the notified plurality of processing items included in flow 170 are allocated respectively to separate processor cores (processing units).

Command generation module 156 outputs a command string for executing, by mutually different processor cores (processing units), the processing that is assigned to be executed in parallel between the start processing item (processing item 352) and the end processing item (processing item 354). Further, command generation module 156 outputs a command string for executing processing items that are continuously assigned following the end processing item (processing item 354), after completing the execution of all processing that is assigned to be executed in parallel between the start processing item (processing item 352) and the end processing item (processing item 354).

The command string (or the program) generated in this case may include an object-format program that can be executed by processor 110, or may include an internal command for instructing a start and an end of the thread to the OS.

The generated command string is stored in RAM 112, hard disk 120 (Fig. 2), and the like. Image-processing execution module 158 executes the image processing to the target camera image, following the command string generated by command generation module 156, and outputs a result of the execution. When the command string includes the execution program of the object format, all or a part of image-processing execution module 158 is realized by the command string. As an installation example, image-processing execution module 158 executes the processing assigned by the command string, by referring to library 160 prepared in advance. That is, library 160 includes library programs that correspond respectively to the processing items which are displayed as a list in processing-item selection area 304 of operation screen 300 illustrated in Fig. 3. Image-processing execution module 158 executes the image processing corresponding to assigned processing items, by calling a necessary library program. With employment of library 160 and the like, processing items can be added or improved more easily.

Fig. 8 exemplifies single control program 150 capable of executing all processing including a flow setting, a command string generation, and an image processing execution. Alternatively, a plurality of programs may realize these functions in cooperation. For example, it is possible to employ an installation mode of dividing the functions so that the personal computer executes the processing associated with the flow setting and the command string generation, and the image processing device receives and executes the command string generated as a result of the execution by the personal computer. In this case, the personal computer executes a program that includes modules corresponding to dialogue processing module 152, automatic parallelizing module 154, and command generation module 156. The image processing device executes a program that includes image-processing execution module 158 and library 160. It is self-explanatory that such an embodiment is also included in the technical range of the present invention.

### <H. Memory area associated with parallelizing processing>

Next, in executing the parallelizing processing according to the embodiment, memory areas for target processing are independently prepared so that the processing of parallelizing tasks can be independently executed.

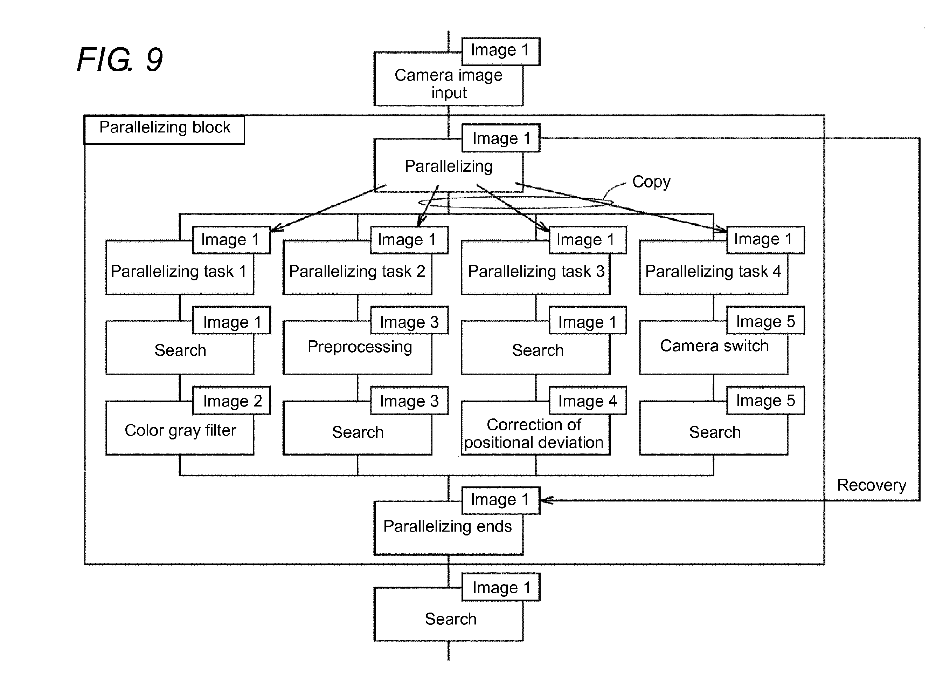

Fig. 9 is an explanatory diagram of handling of image data associated with execution of the parallelizing processing according to the embodiment. In Fig. 9, a parallelizing block is set after executing a processing item of camera image input. Four parallelizing tasks are defined in the parallelizing block. Immediately before executing the parallelizing block, by executing the camera image input, "image 1" as a camera image acquired from imaging unit 8 is held as an image to be processed. After the execution of the parallelizing block is started, one parallelizing task (parallelizing task 1, in the example illustrated in Fig. 9) utilizes a memory area that is used when executing the processing item immediately before. That is, "image 1" is held as an image to be processed.

On the other hand, new memory areas are allocated respectively to the rest of parallelizing tasks (parallelizing tasks 2 to 4, in the example illustrated in Fig. 9). At the same time, image data that is held immediately before executing the parallelizing block is copied to the memory area. That is, each of all the parallelizing tasks that are included in the parallelizing block has an own independent memory area. The image data that is held immediately before the execution is used as initial data in each memory area. Thereafter, a certain processing is executed to the image data, in each of the parallelizing tasks. As a result, the content of the held image data is updated.

The processing of generating a new parallelizing task (thread) and setting a new memory area corresponding to each thread, when executing the parallelizing processing, is realized by the command string that command generation module 156 (Fig. 8) generates. That is, before starting the parallel execution of the processing items, command generation module 156 (Fig. 8) outputs a command for securing the memory areas that are related to respective processor cores (processing unit) associated with the parallel execution, and for copying, in each memory area, the image data that is used before the parallel execution.

After the execution of the parallelizing processing is completed, the image data saved before executing the parallelizing block is recovered, and the execution of the succeeding processing items is started. As described above, the start processing item (processing item 352) includes a command for securing memory areas related respectively to processing units associated with parallel execution, before starting the parallel execution, and for copying, in each memory area, image data that is used before the parallel execution. The end processing item (processing item 354) includes a command for restoring image data that is used before starting the parallel execution.

By properly generating such a thread and a memory area associated with the thread, the parallelizing processing can be properly executed without being affected by other processing items.

### <I. Processing procedure>

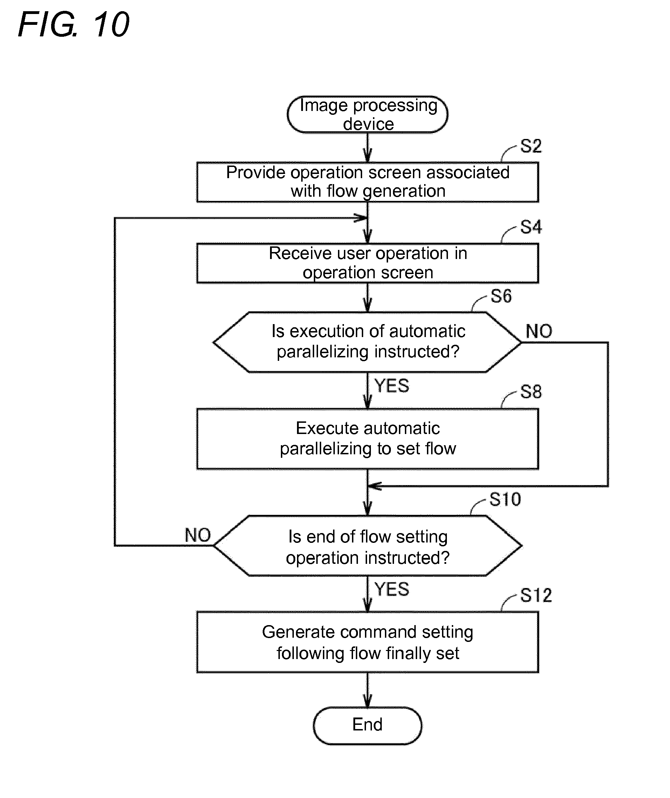

Next, a processing procedure of image processing device 100 according to the embodiment will be described. Fig. 10 is a flowchart for explaining the processing procedure of image processing device 100 according to the embodiment. Processor 110 of image processing device 100 realizes the processing procedure illustrated in Fig. 10, by executing control program 150.

In Fig. 10, image processing device 100 executes control program 150 to provide operation screen 300 associated with a flow generation illustrated in Fig. 3 (Step S2). That is, processor 110 provides at least the interface screen (operation screen 300) for receiving selection of one or more processing items to be used for the image processing of a camera image (image data) in a predetermined plurality of processing items and assignment of the execution order of the selected processing items.

In operation screen 300 that is provided, processor 110 receives the user operation (Step S4). At this time, processor 110 receives the user operation associated with the setting of manual parallelizing as illustrated in Figs. 6(a) and 6(b) and Figs. 7(a) and 7(b). That is, in the interface screen (operation screen 300), processor 110 receives selection of processing items that are to be executed in parallel by two or more processing units in the plurality of processor cores (processing units).

Thereafter, processor 110 determines whether the execution of automatic parallelizing is instructed (Step S6). When the execution of automatic parallelizing is instructed (YES in Step S6), processor 110 executes automatic parallelizing to the flow that is set (Step S8). When the execution of automatic parallelizing is not instructed (NO in Step S6), the processing in Step S6 is skipped.

Processor 110 determines whether the end of the flow setting operation is instructed (Step S10). When the end of the flow setting operation is instructed (YES in Step S10), processor 110 generates a command setting, following a flow that is finally set (Step S12). That is, processor 110 generates a command string to a plurality of processor cores (processing units), following the setting of the input image processing. Then, the processing ends. On the other hand, when the end of the flow setting operation has not been instructed (NO in Step S10), the processing of Step S4 and after is repeated.

### <J. Application example (1)>

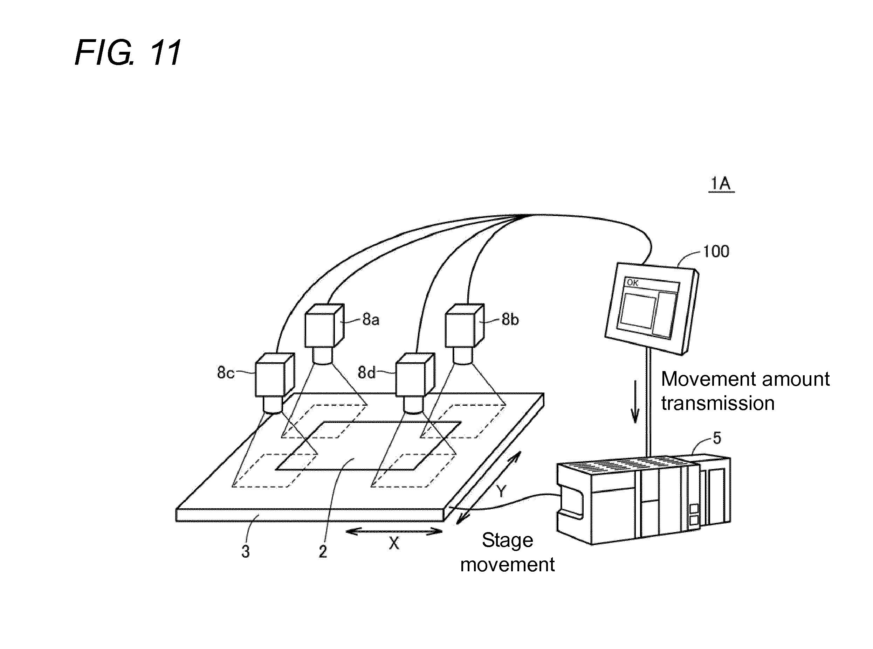

Next, application example (1) of image processing device 100 according to the embodiment will be described. Fig. 11 is a schematic diagram illustrating an entire configuration of image processing system 1A including image processing device 100 according to the embodiment. In a process to which image processing system 1A illustrated in Fig. 11 is applied, workpiece 2 is a base material of a laminated substrate. In the next process, a separate layer is formed on workpiece 2. In such a process, positioning of workpiece 2 is performed so that workpiece 2 matches the process of a layer formation in the next process. More specifically, workpiece 2 is arranged on XY stage 3. Four imaging units 8a, 8b, 8c, and 8d image four corners of workpiece 2, and specify the current position of workpiece 2. At the same time, PLC 5 applies an instruction to move XY stage 3 and position workpiece 2 to a target position.

As a more specific procedure, image processing device 100 acquires camera images that indicate the four corners of workpiece 2 which are imaged by imaging units 8a, 8b, 8c, and 8d. Image processing device 100 detects objects that indicate mark positions included in the acquired camera images. Then, image processing device 100 calculates a necessary movement amount of XY stage 3, according to the mark positions detected in the respective camera images, and transmits the calculated movement amount to PLC 5. PLC 5 causes XY stage 3 to be moved, following the movement amount from image processing device 100.

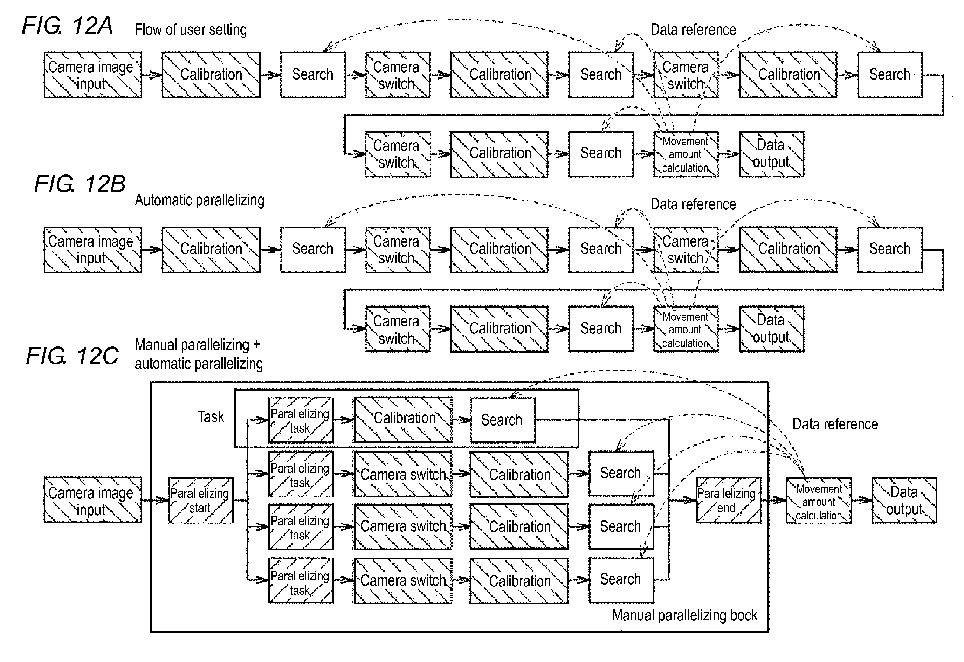

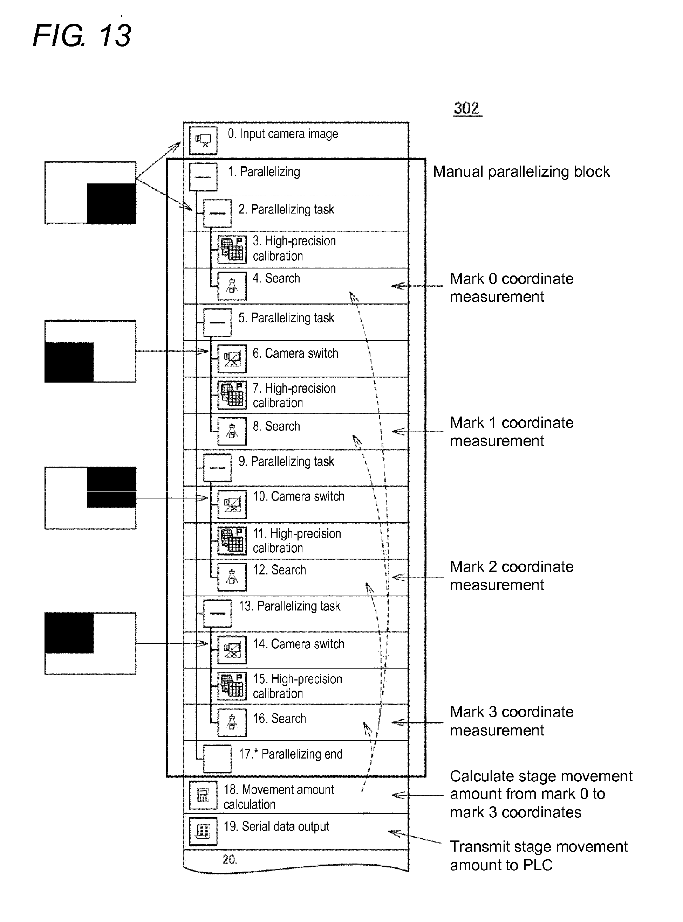

Parallelizing of the image processing in image processing system 1A will be described by comparing automatic parallelizing with manual parallelizing. Figs. 12(a) to 12(c) are explanatory diagrams of parallelizing of the flow of image processing system 1A illustrated in Fig. 10. Fig. 13 is a diagram illustrating an example of a screen user interface corresponding to the flow illustrated in Fig. 12(c).

Fig. 12(a) illustrates an example of a flow for realizing the above processing. Fig. 12(a) illustrates a flow that the user has set without using manual parallelizing. In the flow illustrated in Fig. 12(a), the camera images that imaging units 8a, 8b, 8c, and 8d captured by imaging are processed in series. Results (four results) of processing the camera images are referred to, and a final movement amount is calculated. More specifically, for each corner, a target imaging unit is selected (processing item of "Switch camera"). Calibration (processing item of "Calibration") is performed to the camera image that is acquired from the selected imaging unit. Then, an area that coincides with a model registered in advance is searched

### (processing item of "Search")

Fig. 12(b) illustrates a result of executing automatic parallelizing to the flow illustrated in Fig. 12(a). In Fig. 12(a) and Fig. 12(b), processing items that are to be constrained between the processing items associated with automatic parallelizing are illustrated by hatching. In the processing of automatic parallelizing, image processing device 100 cannot know a relationship between switched camera images. Therefore, even when automatic parallelizing is performed to the flow as illustrated in Fig. 12(a), none of the processing items are parallelized.

On the other hand, the user who knows the processing content that is required in image processing system 1A can understand that it is sufficient to execute in parallel the image processing of the corners. Therefore, a manual parallelizing block as illustrated in Fig. 12(c) is added. At the same time, in the manual parallelizing block, the image processing of the image data at each corner is assigned to be executed in parallel. More specifically, in setting-finished flow display area 302 of operation screen 300, when a user setting as illustrated in Fig. 13 is performed, a manually-parallelized flow as illustrated in Fig. 12(c) can be realized.

When manual parallelizing is properly applied in this way, a total execution speed of the image processing can be increased.

### <K. Application example (2)>

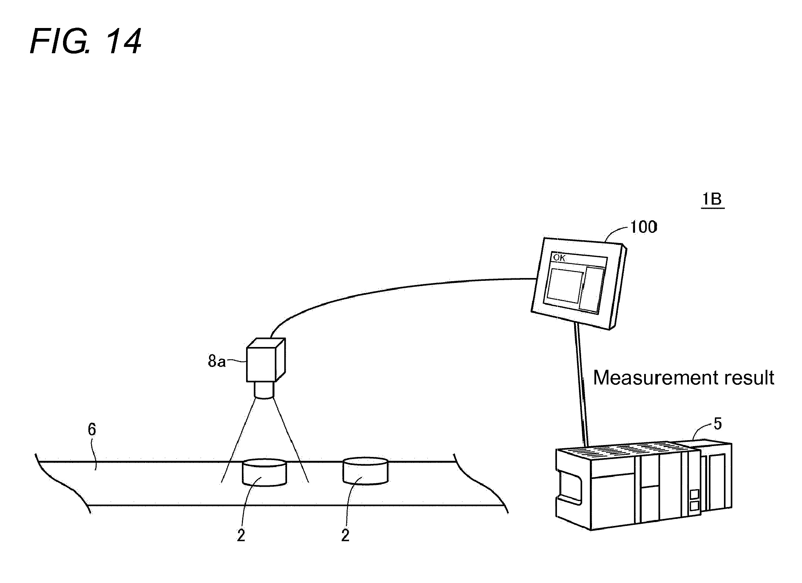

Next, another application example (2) of image processing device 100 according to the embodiment will be described. Fig. 14 is a schematic diagram illustrating an entire configuration of image processing system 1B including image processing device 100 according to the embodiment. In a process to which image processing system 1B illustrated in Fig. 14 is applied, workpieces 2 are bottle caps or the like. After a pre-shipment inspection is performed, when a result of the pre-shipment inspection is OK, necessary information (manufacturing date and time, a serial number, and the like) is printed. As a more detailed procedure, image processing device 100 acquires a camera image ofworkpiece 2 that imaging unit 8a imaged, and inspects a color of a label, a position of the label, and a shape of the label, of workpiece 2 with respect to the acquired camera image. Image processing device 100 transmits results of the inspection to PLC 5. When any one of items does not pass the inspection (that is, when any one of measured items is NG), the measurement processing ends. When all the measured items are OK, a manufacturing date and time, and a serial number are checked, and results of the measurement are transmitted to PLC 5.

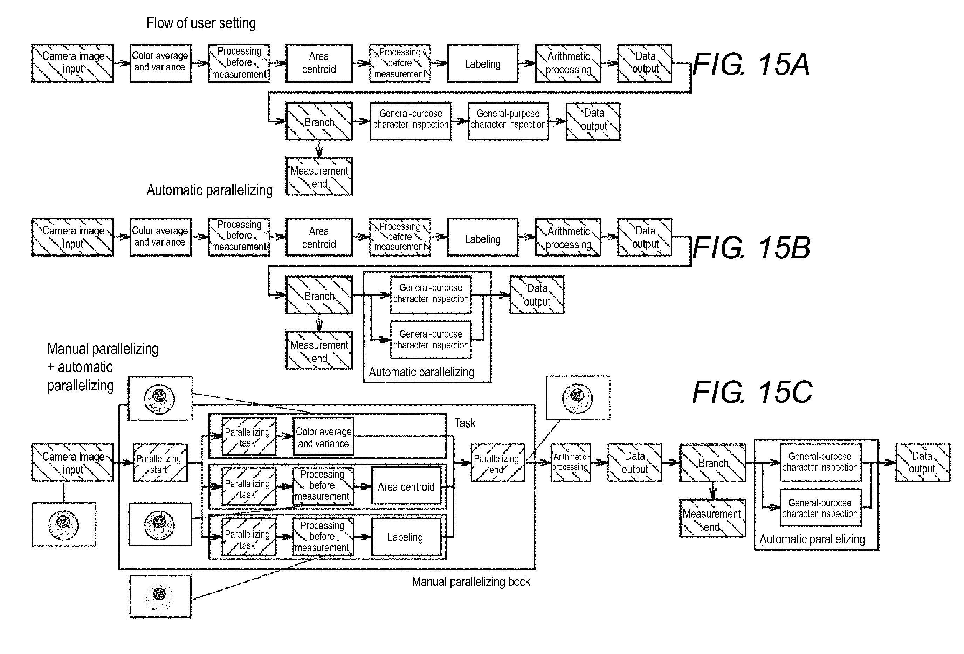

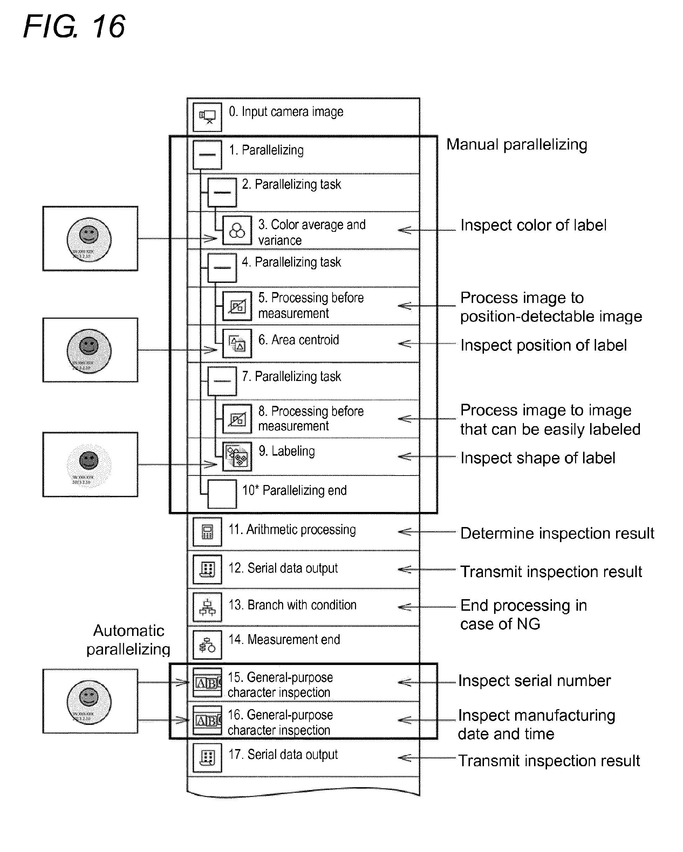

Parallelizing the image processing that is performed by image processing system 1B will be described by comparing automatic parallelizing with manual parallelizing. Figs. 15(a) to 15(c) are explanatory diagrams of parallelizing a flow of the image processing system 1B illustrated in Fig. 14. Fig. 16 is a diagram illustrating an example of a screen user interface corresponding to the flow illustrated in Fig. 15(c).

Fig. 15(a) illustrates an example of a flow for realizing the above processing. Fig. 15(a) illustrates a flow that the user has set without using manual parallelizing. In the flow illustrated in Fig. 15(a), there are executed in series a processing item of "Color average and variance" for inspecting a color of a label, a processing item of "Area centroid" for inspecting a label position, and a processing item of "label" for inspecting a shape of a label. An arithmetic processing is executed by using results of these inspections.

Fig. 15(b) illustrates a result of executing automatic parallelizing to the flow illustrated in Fig. 15(a). In Fig. 15(a) and Fig. 15(b), processing items that are to be constrained between the processing items associated with automatic parallelizing are illustrated by hatching. In the processing of automatic parallelizing, image processing device 100 cannot know the contents of the three inspections and a mutual relationship of the inspections. Therefore, even when automatic parallelizing is performed to the flow as illustrated in Fig. 15(a), the inspection items are not parallelized, and only subsequent general-purpose character inspections are parallelized.

On the other hand, the user who knows the processing contents required in image processing system 1B can understand that it is sufficient to execute the inspection items in parallel. Therefore, a manual parallelizing block as illustrated in Fig. 15(c) is added. At the same time, in the manual parallelizing block, parallel execution of the inspection items of the image data is assigned. More specifically, in setting-finished flow display area 302 of operation screen 300, when a user setting as illustrated in Fig. 16 is performed, manually-parallelized flow as illustrated in Fig. 15(c) can be realized.

When manual parallelizing is properly applied in this way, a total execution speed of the image processing can be increased.

### <L. Advantages>

According to the image processing device of the embodiment, in a more simple operation, it is possible to set the parallel execution of processing items that configure a target image processing. Accordingly, by utilizing the user's knowledge, the target image processing can be executed more efficiently at a higher speed. Further, processing items other than processing items of which the parallel execution the user has set can be also automatically parallelized. Therefore, the time required for the image processing can be more shortened.

It should be considered that the disclosed embodiment is an exemplification in all aspects, and is not limited. It is intended that a range of the present invention is not the above description, and is disclosed in claims, and includes equivalent meanings of claims and all changes within the range.

## Claims

1. An image processing device (100) comprising:
a plurality of processing units (110a, 110b, 110c, 110d);
an input unit (122) configured to receive image data generated by imaging an object (2) to be measured; and
a dialogue processing unit (124, 126, 128, 130, 152) configured to provide at least an interface screen (300) for receiving selection of one or more processing items (402, 404, 406, 408, 410, 412, 414, 416) to be used to image-process image data in a predetermined plurality of processing items and for receiving assignment of an execution order of selected processing items; and
a generator configured to generate a command string to the plurality of processing units (110a, 110b, 110c, 110d), following a setting of an image processing that the dialogue processing unit (124, 126, 128, 130, 152) receives, wherein
the dialogue processing unit (124, 126, 128, 130, 152) is configured to add a set of a start processing item (352) to instruct a start of parallel execution and an end processing item (354) to instruct an end of the parallel execution in relation to an execution order of assigned processing items and arbitrarily receive selection of processing items that are to be executed in parallel by two or more processing units in the plurality of processing units (110a, 110b, 110c, 110d), on the interface screen (300), in response to a user operation of instructing a setting of parallel execution.

2. The image processing device (100) according to claim 1, wherein the generator outputs a command string for making mutually different processing units execute respective processing that is assigned to be executed in parallel between the start processing item (352) and the end processing item (354).

3. The image processing device (100) according to claim 2, wherein the generator outputs a command string for executing processing items that are continuously assigned following the end processing item (354), after completing all processing that is assigned to be executed in parallel between the start processing item (352) and the end processing item (354).

4. The image processing device (100) according to any one of claims 1 to 3, wherein the dialogue processing unit (124, 126, 128, 130, 152) simultaneously deletes the set of the start processing item (352) and the end processing item (354), in response to a user operation of instructing to delete setting of parallel execution.

5. The image processing device (100) according to any one of claims 1 to 3, wherein the dialogue processing unit (124, 126, 128, 130, 152) is configured to receive a plurality of processing items as each processing that is assigned to be processed in parallel between the start processing item (352) and the end processing item (354).

6. The image processing device (100) according to any one of claims 1 to 3, wherein the start processing item (352) comprises a command for securing memory areas related respectively to processing units associated with parallel execution, before start of the parallel execution, and for copying, in each of the memory areas, image data that is used before the parallel execution.

7. The image processing device (100) according to claim 6, wherein the end processing item (354) comprises a command for restoring image data that is used before start of parallel execution.

8. The image processing device (100) according to claim 1, further comprising a change unit configured to change a setting so that the two or more processing units execute, in parallel, processing items other than processing items of which parallel execution is set, following a predetermined rule.

9. A control method of an image processing device (100) comprising a plurality of processing units (110a, 110b, 110c, 110d), each of the processing units executing an image processing of image data generated by imaging an object to be measured, the control method comprising:
a step of providing at least an interface screen (300) for receiving selection of one or more processing items to be used to image-process image data in a predetermined plurality of processing items and for receiving assignment of an execution order of selected processing items;
a step of adding a set of a start processing item (352) to instruct a start of parallel execution and an end processing item (354) to instruct an end of the parallel execution, in relation to an execution order of assigned processing items, and arbitrarily receiving selection of processing items that are to be executed in parallel by two or more processing units in the plurality of processing units (110a, 110b, 110c, 110d), on the interface screen (300), in response to a user operation of instructing a setting of parallel execution; and
a step of generating a command string to the plurality of processing units (110a, 110b, 110c, 110d), following a setting of an input image processing.

10. A program for an image processing device (100) comprising a plurality of processing units (110a, 110b, 110c, 110d), each of the processing units executing an image processing of image data generated by imaging an object to be measured, the program making a computer execute:
a step of providing at least an interface screen (300) for receiving selection of one or more processing items to be used to image-process image data in a predetermined plurality of processing items and for receiving assignment of an execution order of selected processing items;
a step of adding a set of a start processing item (352) to instruct a start of parallel execution and an end processing item (354) to instruct an end of the parallel execution, in relation to an execution order of assigned processing items, and arbitrarily receiving selection of processing items that are to be executed in parallel by two or more processing units in the plurality of processing units (110a, 110b, 110c, 110d), on the interface screen (300), in response to a user operation of instructing a setting of parallel execution; and
a step of generating a command string to the plurality of processing units (110a, 110b, 110c, 110d), following a setting of an input image processing.
